# EUROPÄISCHE PATENTSCHRIFT

(11) **EP 0 465 966 B1**
(45) Veröffentlichungstag und Bekanntmachung des Hinweises auf die Patenterteilung: **31.05.1995**
(21) Anmeldenummer: 91110826.4
(22) Anmeldetag: 29.06.1991
(51) Int. Cl.: G01D 5/26

(54) **Massverkörperung**
Measuring scale
Echelle de mesure

(30) Priorität: 10.07.1990 DE 4021919
(43) Veröffentlichungstag der Anmeldung: 15.01.1992
(73) Patentinhaber: Dr. Johannes Heidenhain GmbH, D-83292 Traunreut (DE)
(72) Erfinder: Fromme, Hartmut, Dipl.-Ing., W-8224 Chieming/Hart (DE)

(56) Entgegenhaltungen:
- WO-A-85/05544
- DE-A- 2 643 304
- DE-U- 8 601 636
- DE-U- 8 616 206
- DE-U- 8 911 313
- FR-A- 2 300 991
- GB-A- 2 162 646

## Beschreibung

Die Erfindung betrifft eine Maßverkörperung gemäß dem Oberbegriff des Anspruches 1.

Eine derartige Maßverkörperung findet insbesondere bei einer Positionsmeßeinrichtung zur Messung der Relativlage zweier Objekte, beispielsweise zweier Maschinenteile einer Bearbeitungsmaschine, Verwendung.

Aus der DE-PS 25 05 587 ist eine Längenmeßeinrichtung bekannt, bei der ein Teilungsträger an einem Gehäuse als Grundkörper ohne direkte Berührung mittels einer elastischen Klebeschicht befestigt ist, um bei unterschiedlichen thermischen Ausdehnungskoeffizienten des Grundkörpers und des Teilungsträgers Meßungenauigkeiten zu vermeiden.

Dem DE-GM 89 11 313 entnimmt man eine Maßverkörperung, bei der ein Teilungsträger aus Glas auf einem Grundkörper aus Stahl mittels einer dünnen unelastischen Klebeschicht aus einem Hartkleber befestigt ist, um bei Temperaturänderungen das Temperaturverhalten des Grundkörpers aus Stahl über die dünne Hartkleberschicht dem Teilungsträger aus Glas aufzuzwingen, so daß die Maßverkörperung in etwa dem Temperaturverhalten des Maschinenteils aus Stahl entspricht, an dem sie befestigt ist. Um eine möglichst dünne Hartkleberschicht zur größtmöglichen Kraftübertragung zu erhalten, sind in der Klebefläche des Grundkörpers und/oder in der Klebefläche des Teilungsträgers Vertiefungen zur Aufnahme des überschüssigen Hartklebers beim Klebevorgang vorgesehen.

Die DE-AS 26 43 304 beschreibt eine Längenmeßeinrichtung, bei der ein Teilungsträger auf den Rändern einer in Meßrichtung verlaufenden rechteckigen Nut eines Gehäuses als Grundkörper aufliegt. Der Teilungsträger ist in seiner Mitte mittels eines unelastischen Klebemittels in der Nut und zu beiden Seiten mittels eines hochelastischen Klebemittels in der Nut mit dem Grundkörper verbunden, um eine vom Grundkörper unabhängige thermische Ausdehnung gleichmäßig von seiner Mitte aus zu erzielen, so daß die Mitte des Teilungsträgers ihre Lage bezüglich des Grundkörpers unverändert beibehält.

Die Haftung der Klebeschicht an den Klebeflächen des Grundkörpers und/oder des Teilungsträgers ist je nach deren Oberflächeneigenschaften in Abhängigkeit von der Reinigung mehr oder weniger gut, so daß es zumindest zu partiellen Ablösungen der Klebeschicht von den Klebeflächen des Grundkörpers und/oder des Teilungsträgers kommen kann, wodurch die Ebenheit der Teilungsfläche des Teilungsträgers beeinträchtigt und der Abtastabstand zwischen dieser Teilungsfläche und der Abtastteilungsfläche der Abtasteinheit verändert werden, was sowohl zu Meßungenauigkeiten als auch zu Funktionsstörungen führen kann.

Der Erfindung liegt die Aufgabe zugrunde, bei einer Maßverkörperung der genannten Gattung eine sichere Haftung der Klebeschicht an den Klebeflächen des Grundkörpers und/oder des Teilungsträgers zu gewährleisten.

Diese Aufgabe wird erfindungsgemäß durch das kennzeichnende Merkmal des Anspruches 1 gelöst.

Die mit der Erfindung erzielten Vorteile bestehen insbesondere darin, daß durch die vorgeschlagene formschlüssige Befestigung der Klebeschicht an den Klebeflächen des Grundkörpers und/oder des Teilungsträgers ihre Ablösung sicher vermieden wird, so daß keine dadurch bedingten Meßungenauigkeiten auftreten können.

Vorteilhafte Ausbildungen der Erfindung entnimmt man den abhängigen Ansprüchen.

Ausführungsbeispiele der Erfindung werden anhand der schematischen Zeichnung näher erläutert.

Es zeigen
- Figur 1: eine gekapselte Längenmeßeinrichtung im Querschnitt;
- Figur 2: eine erste vergrößerte Maßverkörperung der Längenmeßeinrichtung nach Figur 1 im Querschnitt;
- Figur 3: eine zweite Maßverkörperung im Querschnitt;
- Figur 4: eine dritte Maßverkörperung im Querschnitt und
- Figur 5: eine vierte Maßverkörperung im Querschnitt.

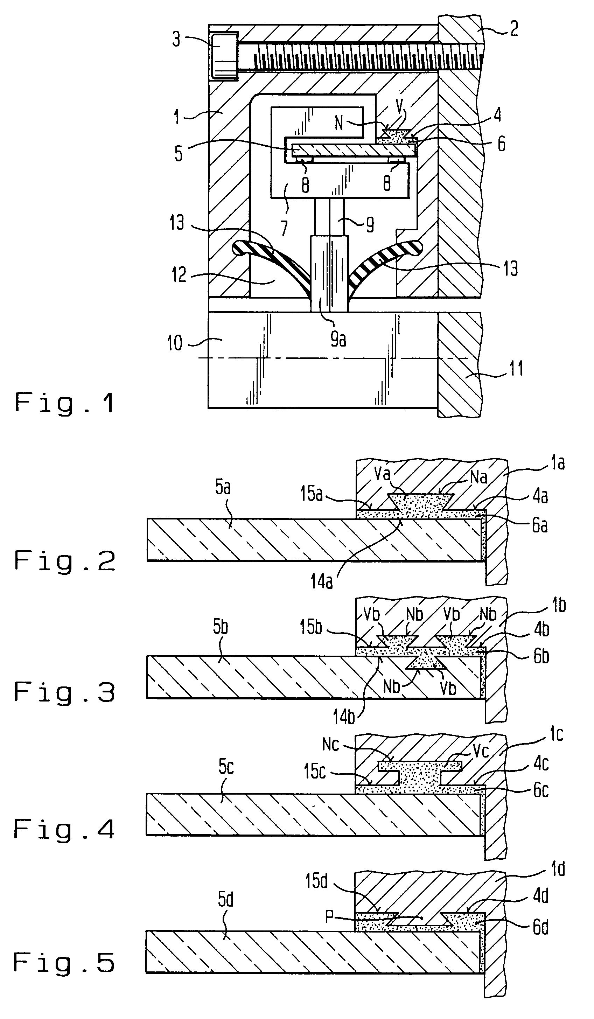

In Figur 1 ist ein Querschnitt einer gekapselten Längenmeßeinrichtung zur Messung der Relativlage zweier Objekte gezeigt, deren Gehäuse 1 als Grundkörper mit dem einen Objekt 2 mittels Schrauben 3 verbunden ist. Im Inneren des Gehäuses 1 ist an einer Anlagefläche 4 ein Teilungsträger 5 mittels einer Klebeschicht 6 in bekannter Weise befestigt. Eine Abtasteinheit 7 zur Abtastung der Teilung des Teilungsträgers 5 ist auf dessen Teilungsebene mittels Rollen 8 geführt und über eine nicht dargestellte Kupplung mit einem Mitnehmer 9 verbunden, der über ein Montageelement 10 am zweiten Objekt 11 befestigt ist. Das Gehäuse 1 weist in Meßrichtung einen Längsschlitz 12 auf, der durch zwei dachförmig geneigte Dichtlippen 13 verschlossen ist, durch die der Mitnehmer 9 mit seinem doppelschwertförmigen Teil 9a hindurchgreift. Die beiden Objekte 2, 11 können durch zwei Maschinenteile einer nicht gezeigten Bearbeitungsmaschine gebildet sein.

Zur Vermeidung wenigstens einer partiellen Ablösung ist erfindungsgemäß die Klebeschicht 6 am Grundkörper 1 und/oder am Teilungsträger 5 formschlüssig befestigt.

Figur 2 zeigt eine erste vergrößerte Maßverkörperung der Längenmeßeinrichtung nach Figur 1 im Querschnitt. Der Teilungsträger 5a mit der Teilung ist auf der Anlagefläche 4a des Grundkörpers 1a in Form des Gehäuses mittels der Klebeschicht 6a befestigt. Der Grundkörper 1a besteht aus Aluminium und der Teilungsträger 5a aus Glas. Während die Haftung der Klebeschicht 6a auf der Klebefläche 14a des Teilungsträgers 5a aus Glas für eine sichere Befestigung ausreichend ist, kann es beim Grundkörper 1a aus Aluminium zumindest zu partiellen Ablösungen der Klebeschicht 6a von der Klebefläche 15a des Grundkörpers 1a kommen. Zur Vermeidung solcher Ablösungen greift die Klebeschicht 6a mittels eines Vorsprungs Va in eine Vertiefung Na in Form einer schwalbenschwanzförmigen Nut in der Klebefläche 15a des Grundkörpers 1a ein; dieser Vorsprung Va füllt die gesamte Nut Na aus, so daß eine sichere Haftung der Klebeschicht 6a an der Klebefläche 15a des Grundkörpers 1a gewährleistet ist.

Figur 3 zeigt eine zweite Maßverkörperung im Querschnitt, bei der der Teilungsträger 5b mit der Teilung auf der Anlagefläche 4b des Grundkörpers 1b in Form des Gehäuses mittels der Klebeschicht 6b befestigt ist. Zur Vermeidung von Ablösungen greift die Klebeschicht 6b mittels zweier Vorsprünge Vb in zwei Vertiefungen Nb in Form schwalbenschwanzförmiger Nuten in der Klebefläche 15b des Grundkörpers 1b und mittels eines Vorsprungs Vb in eine Vertiefung Nb in Form einer schwalbenschwanzförmigen Nut in der Klebefläche 14b des Teilungsträgers 5b ein; diese Vorsprünge Vb füllen die gesamten Nuten aus, so daß eine sichere Haftung der Klebeschicht 6b an der Klebefläche 15b des Grundkörpers 1b und an der Klebefläche 14b des Teilungsträgers 5b gewährleistet ist.

Figur 4 zeigt eine dritte Maßverkörperung im Querschnitt, bei der der Teilungsträger 5c mit der Teilung auf der Anlagefläche 4c des Grundkörpers 1c in Form des Gehäuses mittels der Klebeschicht 6c befestigt ist. Zur Vermeidung von Ablösungen greift die Klebeschicht 6c mittels eines Vorsprungs Vc in eine Vertiefung Nc in Form einer T-förmigen Nut in der Klebefläche 15c des Grundkörpers 1c ein; dieser Vorsprung Vc füllt die gesamte Nut Nc aus, so daß eine sichere Haftung der Klebeschicht 6c an der Klebefläche 15c des Grundkörpers 1c gewährleistet ist.

Figur 5 zeigt eine vierte Maßverkörperung im Querschnitt, bei der der Teilungsträger 5d mit der Teilung auf der Anlagefläche 4d des Grundkörpers 1d in Form des Gehäuses mittels der Klebeschicht 6d befestigt ist. Zur Vermeidung von Ablösungen umgreift die Klebeschicht 6d einen schwalbenschwanzförmigen Vorsprung P auf der Klebefläche 15d des Grundkörpers 1d, so daß eine sichere Haftung der Klebeschicht 6d an der Klebefläche 15d des Grundkörpers 1d gewährleistet ist.

Vorzugsweise besteht die Klebeschicht 6 aus einem elastischen Kleber, beispielsweise aus Silikonkautschuk. Die wenigstens eine Nut N kann im Bereich der Klebefläche 14, 15 durchgehend oder partiell verlaufen und sich in Meßrichtung und/oder quer zur Meßrichtung erstrecken.

Die Querschnitte der Vertiefungen N bzw. der Vorsprünge P des Grundkörpers 1 und/oder des Teilungsträgers 5 können selbstverständlich beliebiger Art sein; wesentlich ist, daß durch eine Hinterschneidung eine formschlüssige Befestigung der Klebeschicht 6 auf den Klebeflächen 15, 14 des Grundkörpers 1 und/oder des Teilungsträgers 5 erzielt wird.

Sinngemäß kann die Erfindung auch bei einer Winkelmeßeinrichtung verwendet werden, wie sie beispielsweise in der DE-AS 28 41 501 beschrieben ist.

Entgegen der Darstellung nach Figur 1 kann die Erfindung auch bei einer offenen, das heißt ungekapselten Meßeinrichtung Anwendung finden.

In nicht dargestellter Weise können auch beliebige Kombinationen von Vertiefungen und Vorsprüngen in den Klebeflächen des Grundkörpers und/oder des Teilungsträgers vorgesehen sein.

## Patentansprüche

1. Maßverkörperung, insbesondere für eine Positionsmeßeinrichtung, bei der auf einem Grundkörper mittels einer Klebeschicht ein eine Teilung aufweisender Teilungsträger befestigt ist, dadurch gekennzeichnet, daß der Grundkörper (1) und/oder der Teilungsträger (5) nach Art einer Hinterschneidung durchgehend oder partiell mindestens eine Nut (N) und/oder einen Vorsprung (P) aufweist, und daß die Klebeschicht (6) zwischen Grundkörper (1) und Teilungsträger (5) zur Vermeidung ihrer Ablösung die Nut (N) formschlüssig ausfüllt oder den Vorsprung (P) formschlüssig umgreift.

2. Maßverkörperung nach Anspruch 1, dadurch gekennzeichnet, daß die Nut (Na) einen schwalbenschwanzförmigen Querschnitt aufweist.

3. Maßverkörperung nach Anspruch 1, dadurch gekennzeichnet, daß die Nut (Nc) einen T-förmigen Querschnitt aufweist.

4. Maßverkörperung nach Anspruch 1, dadurch gekennzeichnet, daß der Vorsprung (P) einen schwalbenschwanzförmigen Querschnitt aufweist.

5. Maßverkörperung nach Anspruch 1, dadurch gekennzeichnet, daß die Klebeschicht (6) aus einem elastischen Kleber besteht.

6. Maßverkörperung nach den Ansprüchen 1 bis 4, dadurch gekennzeichnet, daß sich die Nut (N) und/oder der Vorsprung (P) in Meßrichtung und/oder quer zur Meßrichtung erstrecken.

7. Maßverkörperung nach Anspruch 1 als Bestandteil einer gekapselten Längenmeßeinrichtung, dadurch gekennzeichnet, daß der Grundkörper (1) gleichzeitig das Gehäuse für den Teilungsträger (5) und für eine Abtasteinheit (7) zur Abtastung der Teilung des Teilungsträgers (5) bildet, daß der Teilungsträger (5) mittels der elastischen Klebeschicht (6) an einer Anlagefläche (4) des Grundkörpers (1) befestigt ist und daß die Klebeschicht (6) mittels wenigstens eines Vorsprungs (V) in wenigstens eine Vertiefung (N) in der Klebefläche (15) des Gehäuses (1) formschlüssig eingreift.

8. Maßverkörperung nach Anspruch 7, dadurch gekennzeichnet, daß das Gehäuse (1) aus Aluminium und der Teilungsträger (5) aus Glas bestehen.

## Claims

1. Embodiment of a measure, in particular for a position measuring device, in which a graduation carrier comprising a graduation is mounted on a main body by means of an adhesive layer, characterised in that the main body (1) and/or the graduation carrier (5) comprises continuously or partially at least one groove (N) and/or one projection (P) after the fashion of an undercut, and in that the adhesive layer (6) between main body (1) and graduation carrier (5) fills the groove (N) in form-locking relationship or encompasses the projection (P) in form-locking relationship to avoid detachment thereof.

2. Embodiment of a measure according to claim 1, characterised in that the groove (Na) has a dovetail-shaped cross-section.

3. Embodiment of a measure according to claim 1, characterised in that the groove (Nc) has a T-shaped cross-section.

4. Embodiment of a measure according to claim 1, characterised in that the projection (P) has a dovetail-shaped cross-section.

5. Embodiment of a measure according to claim 1, characterised in that the adhesive layer (6) consists of a flexible adhesive.

6. Embodiment of a measure according to claims 1 to 4, characterised in that the groove (N) and/or the projection (P) extend in the direction of measurement and/or transversely to the direction of measurement.

7. Embodiment of a measure according to claim 1 as part of an encapsulated length measuring device, characterised in that the main body (1) simultaneously forms the housing for the graduation carrier (5) and for a scanning unit (7) for scanning the graduation of the graduation carrier (5), in that the graduation carrier (5) is fixed by means of the flexible adhesive layer (6) to a contact face (4) of the main body (1) and in that the adhesive layer (6) by means of at least one projection (V) engages in form-locking relationship in at least one recess (N) in the adhesive surface (15) of the housing (1).

8. Embodiment of a measure according to claim 7, characterised in that the housing (1) is made of aluminium and the graduation carrier (5) of glass.

## Revendications

1. Mesure matérialisée, en particulier pour un dispositif de mesure de position, dans laquelle un support de graduation portant une graduation est fixé au moyen d'une couche d'adhésif sur un corps de base, caractérisée par le fait que le corps de base (1) et/ou le support de graduation (5) présente au moins une rainure (N) et/ou une saillie (P) continue ou partielle de type contre-dépouille et par le fait que la couche d'adhésif (6) disposée entre le corps de base (1) et le support de graduation (5), aux fins d'éviter un décollement de ceux-ci, remplit la rainure (N) ou entoure la saillie (P) en réalisant une liaison par obstacle.

2. Mesure matérialisée selon la revendication 1, caractérisée par le fait que la rainure (Na) présente une section transversale en queue d'aronde.

3. Mesure matérialisée selon la revendication 1, caractérisée par le fait que la rainure (Nc) présente une section transversale en T.

4. Mesure matérialisée selon la revendication 1, caractérisée par le fait que la saillie (P) présente une section transversale en queue d'aronde.

5. Mesure matérialisée selon la revendication 1, caractérisée par le fait que la couche d'adhésif (6) se compose d'une colle élastique.

6. Mesure matérialisée selon les revendications 1 à 4, caractérisée par le fait que la rainure (N) et/ou la saillie (P) s'étendent dans la direction de mesure et/ou transversalement à celle-ci.

7. Mesure matérialisée selon la revendication 1 en tant que partie d'un dispositif de mesure de longueur étanche, caractérisée par le fait que le corps de base (1) constitue simultanément le boîtier pour le support de graduation (5) et pour une unité de lecture (7) qui lit la graduation du support de graduation (5), par le fait que le support de graduation (5) est fixé sur une surface (4) du corps de base (1) au moyen de la couche (6) élastique d'adhésif et par le fait que la couche d'adhésif (6) pénètre en réalisant une liaison par obstacle par au moins une saillie (V) dans au moins une dépression (N) dans la surface (15) de collage du boîtier (1).

8. Mesure matérialisée selon la revendication 7, caractérisée par le fait que le boîtier (1) est en aluminium et que le support de graduation (5) est en verre.
